Europäisches Patentamt

European Patent Office

Office européen des brevets

(11) Veröffentlichungsnummer: **0 484 711 A1**

## (12) EUROPÄISCHE PATENTANMELDUNG

(21) Anmeldenummer: **91117765.7**

(22) Anmeldetag: **17.10.91**

(51) Int. Cl.5: **B29C 47/16**

(30) Priorität: **09.11.90 DE 4035709**
**20.12.90 DE 4041069**

(43) Veröffentlichungstag der Anmeldung:
**13.05.92 Patentblatt 92/20**

(84) Benannte Vertragsstaaten:
**AT BE DE FR GB IT**

(71) Anmelder: **Windmöller & Hölscher**
**Münsterstrasse 50**
**W-4540 Lengerich(DE)**

(72) Erfinder: **Voss, Klaus-Dieter, Dipl.-Ing.**
**Lessingstrasse 10**
**W-4540 Lengerich(DE)**

(74) Vertreter: **Gossel, Hans K., Dipl.-Ing.**
**Lorenz-Seidler-Gossel et al**
**Widenmayerstrasse 23**
**W-8000 München 22(DE)**

(54) **Breitschlitzdüse eines Extruders.**

(57) Eine Breitschlitzdüse eines Extruders zur Herstellung von Flachfolien besteht aus einem oberen und einem unteren Düsenteil mit langgestreckten Düsenlippen (2,4), die den Austrittsspalt oben und unten begrenzen. Mindestens eine der beiden Düsenlippen (2,4) ist in ihrem vorderen Bereich durch Verringerung ihrer Dicke flexibel ausgebildet. Auf diesen vorderen Bereich stützen sich im Abstand von einander an düsenfesten Widerlagern gehaltene Stellbolzen (3) ab, die die Düsenlippe mit einer ihrer Stellgröße entsprechenden Biegelinie verformen. Um die Herstellung von Flachfolien zu ermöglichen, deren Dickenabweichungen von einer vorgegebenen mittleren Dicke innerhalb gewünschter Toleranzgrenzen liegen, sind die Stellbolzen (3) im Bereich ihrer Abstützung auf dem flexiblen Bereich der Düsenlippe mit einem Wärme schlecht leitenden Kopf (5) und/oder mit einer Schicht aus wärmeisolierendem Material versehen.

FIG.1

Die Erfindung betrifft eine Breitschlitzdüse eines Extruders zur Herstellung von Flachfolien, bestehend aus einem oberen und einem unteren Düsenteil mit langgestreckten Düsenlippen, die den Austrittsspalt oben und unten begrenzen, wobei mindestens eine der beiden Düsenlippen, und zwar vorzugsweise die obere, in ihrem vorderen Bereich durch Verringerung ihrer Dicke flexibel ausgebildet ist und sich auf diesen vorderen Bereich im Abstand voneinander und an düsenfesten Widerlagern gehalterte Stellbolzen abstützen, wie die Düsenlippe mit einer ihrer Stellgröße entsprechenden Biegelinie verformen.

Breitschlitzdüsen dieser Art ermöglichen es, durch entsprechende Erwärmung und/oder Abkühlung der Stellbolzen, die üblicherweise aus Wärmedehnbolzen bestehen, das Dickenprofil der extrudierten Flachfolie über deren Breite im Ganzen und/oder bereichsweise zu ändern. Wird die Dicke der extrudierten Flachfolie über ihre Breite gemessen, kann eine gewünschte Regelung des Dickenprofils vorgenommen werden, wobei dann die Stellbolzen die Stellglieder des Regelkreises bilden.

In der Praxis wurde nun festgestellt, daß sich häufig mit Breitschlitzdüsen der eingangs angegebenen Art auch dann keine Flachfolien herstellen lassen, deren Dickenschwankungen über deren Breiten vorgegebene Toleranzen nicht überschreiten, wenn entsprechend gemessenen Dickenabweichungen die Stellbolzen beaufschlagt werden.

Aufgabe der Erfindung ist es daher, eine Breitschlitzdüse der eingangs angegebenen Art zu schaffen, mit der sich bei Verwendung entsprechender Steuer- oder Regeleinrichtungen Flachfolien herstellen lassen, deren Dickenabweichungen von einer vorgegebenen mittleren Dicke innerhalb gewünschter Toleranzgrenzen liegen.

Erfindungsgemäß wird diese Aufgabe bei einer Breitschlitzdüse der gattungsgemäßen Art dadurch gelöst, daß die Stellbolzen im Bereich ihrer Abstützung auf dem flexiblen Bereich der Düsenlippe mit einem Wärme schlecht leitenden Kopf und/oder mit einer Schicht aus Wärme isolierendem Material versehen sind. Die Erfindung geht von der Erkenntnis aus, daß gleichmäßig oder unterschiedlich mit Wärme beaufschlagte Wärmedehnbolzen zwar eine Verformung der Düsenlippe entsprechend einer gewünschten Biegelinie herbeizuführen vermögen, daß aber allein diese Biegelinie einer Düsenlippe nicht ausreicht, um ein gewünschtes Dickenprofil der Flachfolie über deren Breite zu erzeugen. Dies liegt daran, daß die Wärmedehnbolzen entsprechend ihrer unterschiedlichen Erwärmung auch den jeweiligen Abstützbereich an der Düsenlippe unterschiedlich erwärmen, so daß dadurch eine Wärmebeeinflussung der extrudierten Kunststoffschmelze erfolgt. Diese unterschiedliche Erwärmung über die Länge der Düsenlippe führt dazu, daß an wärmeren Bereichen aufgrund der sich dadurch einstellenden geringeren Viskosität größere Mengen an Kunststoffschmelze extrudiert werden, was zu einer Veränderung des Dickenprofils führt, die sich durch entsprechende Erwärmung der Wärmedehnbolzen nicht beeinflussen läßt. Da nach der Erfindung die Wärmedehnbolzen in ihrem Abstützbereich auf der Düsenlippe isoliert oder schlecht wärmeleitend ausgebildet sind, ist eine Beeinflussung des Dickenprofils der extrudierten Flachfolie durch zusätzliche über die Wärmedehnbolzen zugeführte Wärme verhindert oder zumindest auf ein vernachlässigbares Maß verringert.

Im vorhergehenden Absatz sind als Beispiel von Stellbolzen übliche Wärmedehnbolzen genannt worden. Als Stellbolzen können jedoch sämtliche Bolzen verwendet werden, die durch Beaufschlagung mit einer Stellgröße ihre Länge verändern. Als Stellbolzen können daher nicht nur Wärmedehnbolzen, sondern auch Piezotranslatoren verwendet werden. Auch derartige Elemente können trotz ihrer elektrischen Ansteuerung zu einem ungleichen Wärmeprofil führen, da sie die Düsenlippe punktförmig beaufschlagen und daher Wärmesenken bilden können.

Zweckmäßigerweise ist der Kopf des Stellbolzens hohl ausgebildet, so daß der eine Wärmeübertragung bewirkende Querschnitt herabgesetzt ist. Um eine entsprechende Verringerung des eine Wärmeübertragung bewirkenden Querschnitts zu erreichen, kann der Kopf des Stellbolzen mit einer axialen Sackbohrung versehen sein.

Zusätzlich können die Wandungen des hohlen Bereichs der Wärmedehnbolzen mit radialen Bohrungen versehen sein, die eine Belüftung ermöglichen und zusätzlich einen Wärmeausgleich begünstigen.

Nach einer Weiterbildung ist vorgesehen, daß der Kopf eine geschlossene Kammer aufweist, die mit radialen Rohrstutzen o.dgl. zum Anschluß von kühlende Medien zu- und abführenden Leitungen versehen ist. Durch eine besondere Kühlung oder Temperierung kann gewährleistet werden, daß der Kopfbereich der Stellbolzen in etwa immer auf der gleichen Temperatur gehalten ist wie die Düsenlippe.

Darüber hinaus kann der Kopf aus schlecht wärmeleitendem Material bestehen oder aber zusätzlich mit einer Wärmeisolierung versehen sein.

In Umkehrung kann mindestens eine Düsenlippe auch von Stellbolzen beaufschlagt sein, die diese auf Zug beanspruchen. Die gewünschte Biegelinie der Düsenlippe läßt sich nämlich auch durch Zugbeanspruchung herstellen. In diesem Falle müssen die Stellbolzen zusätzlich auch zugfest mit den Düsenlippen verbunden sein, was in bekannter Weise beispielsweise durch eingeschraubte Zuganker erfolgen kann. Ausführungsbeispiele der Erfindung werden nachstehend anhand der Zeichnung näher erläutert. In dieser zeigt

Fig.1     einen Länggschnitt durch eine Breitschlitzdüse mit Wärmedehnbolzen, deren Spitzen aus Isoliermaterial bestehen,

Fig.2     einen der Fig.1 entsprechenden Schnitt durch eine Breitschlitzdüse, bei der die Spitzenbereiche der Wärmedehnbolzen Kammern aufweisen, die mit radialen Stutzen zum Anschluß von Kühlmittelleitungen versehen sind, und

Fig.3     einen der Fig.1 entsprechenden Schnitt durch eine Breitschlitzdüse, bei der die Spitzen der Wärmedehnbolzen mit Sacklöchern versehen sind.

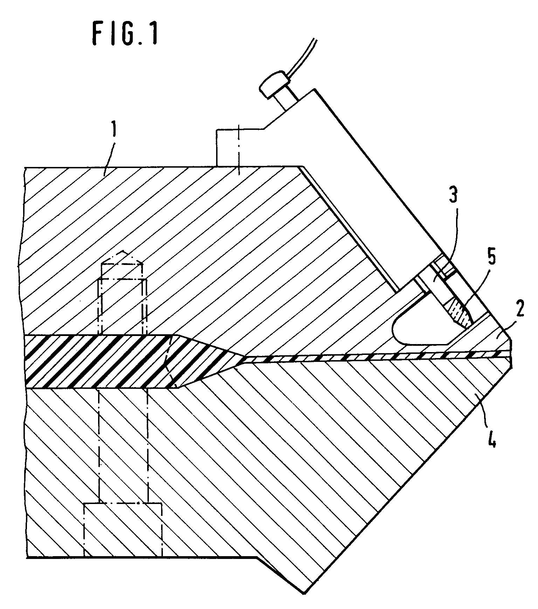

Aus Fig.1 ist ein vertikaler Längsschnitt durch den vorderen Teil einer Breitschlitzextruderdüse 1 ersichtlich. Mit dem oberen Düsenteil ist in der dargestellten Weise ein Gehäuse verschraubt, in dem ein Wärmedehnbolzen 3, der mit einer diesen temperierenden Einrichtung versehen ist, in der Weise gehaltert ist, daß sich dessen unterer Bereich entsprechend der Wärmebeaufschlagung durch Dehnen verlängern oder Schrumpfen verkürzen kann. Von dem oberen Düsenteil 1 ist durch eine Quernut eine obere Lippe 2 abgeteilt, die durch die Wärmedehnbolzen 3 stärker oder schwächer gegen den unteren Düsenteil angedrückt werden kann.

Auf die obere Lippe 2 der Breitschlitzextruderdüse wirken über ihre gesamte Länge gleichmäßig verteilt, eine Vielzahl von Wärmedehnbolzen 3 ein. Durch mehr oder weniger starkes Temperieren einzelner Wärmedehnbolzen 3 kann dann die Düsenlippe 2 wellenförmig gebogen werden, so daß die obere Lippe 2 mehr oder weniger stark gegen die untere Düsenlippe 4 angestellt wird, wodurch sich der Austrittsspalt bereichsweise ändert zwecks Erzielung eines vorgegebenen Dickenprofils in der Folienbahn. Um nun zu vermeiden, daß ein Wärmeaustausch von der oberen Lippe 2 zu den Wärmedehnbolzen 3 stattfindet, sind die einzelnen Wärmedehnbolzen 3 an ihre an der oberen Lippe 2 anliegenden Bereich aus Isoliermaterial 5 gebildet.

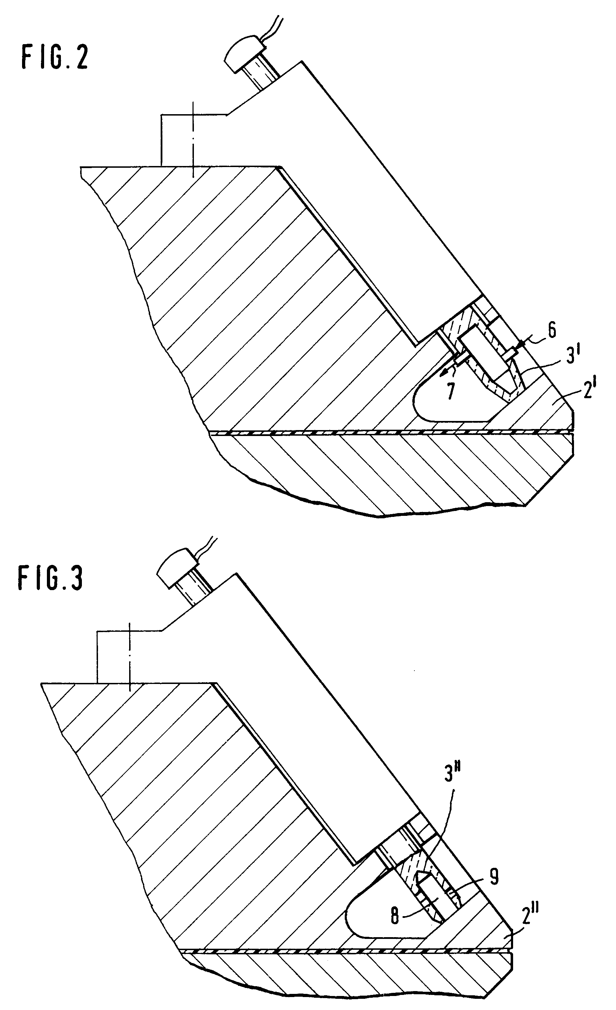

Eine weitere Möglichkeit, einen Wärmeübergang zu vermeiden, besteht darin, wie die Figur 2 zeigt, den Bereich der Wärmedehnbolzen 3', die mit der oberen Düsenlippe 2' in Verbindung stehen, hohl auszubilden und mit einem Zulauf 6 und einem Ablauf 7 zu versehen, so daß alle Bolzen in diesen Bereichen beispielsweise durch Zufuhr von entsprechend temperierten Flüssigkeiten oder entsprechend temperierter Luft auf die Temperatur der oberen Düsenlippe 2' gebracht werden können. Zusätzlich besteht die Möglichkeit, die vorderen Bereiche 3' der Wärmedehnbolzen ebenfalls aus Isoliermaterial auszubilden, wie dies bei der Ausführung gemäß Figur 1 der Fall ist.

Eine weitere Möglichkeit der Isolierung zeigt die Figur 3. In diesem Fall sind die Wärmedehnbolzen 3'' in dem Bereich, in dem sie an der oberen Lippe 2'' anliegen, hohlgebohrt, so daß die Auflagefläche der Dehnbolzen an der Düsenlippe 2'' möglichst gering ist und somit auch nur ein geringer Wärmefluß stattfindet. Zusätzlich können die Wärmedehnbolzen 3'' im Bereich dieser Hohlbohrung 8 mit Querbohrungen versehen sein, die mit 9 bezeichnet sind.

## Patentansprüche

1.    Breitschlitzdüse eines Extruders zur Herstellung von Flachfolien, bestehend aus einem oberen und einem unteren Düsenteil mit langgestreckten Düsenlippen, die den Austrittsspalt oben und unten begrenzen, wobei mindestens eine der beiden Düsenlippen, und zwar vorzugsweise die obere, in ihrem vorderen Bereich durch Verringerung ihrer Dicke flexibel ausgebildet ist und sich auf diesen vorderen Bereich im Abstand voneinander und an düsenfesten Widerlagern gehalterte Stellbolzen abstützen, die die Düsenlippe mit einer ihrer Stellgröße entsprechenden Biegelinie verformen,

     **dadurch gekennzeichnet,**

     daß die Stellbolzen (3) im Bereich ihrer Abstützung auf dem flexiblen Bereich der Düsenlippe (2) mit einem Wärme schlecht leitenden Kopf und/oder mit einer Schicht aus wärmeisolierendem Material versehen sind.

2.    Breitschlitzdüse nach Anspruch 1, dadurch gekennzeichnet, daß der Kopf (5) des Stellbolzens (3) aus wärmeisolierendem Material besteht.

3.    Breitschlitzdüse nach Anspruch 1 oder 2, dadurch gekennzeichnet, daß der Kopf des Stellbolzens (3) hohl ausgebildet ist.

4.    Breitschlitzdüse nach Anspruch 3, dadurch gekennzeichnet, daß der Kopf des Stellbolzens mit einer axialen Sackbohrung (8) versehen ist.

5.    Breitschlitzdüse nach Anspruch 3 oder 4, dadurch gekennzeichnet, daß die Wandung des hohlen Bereichs (8) mit radialen Bohrungen (9) versehen ist.

6.  Breitschlitzdüse nach Anspruch 3, dadurch gekennzeichnet, daß der Kopf (3') eine geschlossene Kammer aufweist, die mit radialen Rohrstützen (6,7) o.dgl. zum Anschluß von temperierende Medien zu- und abführenden Leitungen versehen ist.

7.  Breitschlitzdüse nach einem der Ansprüche 1 bis 6, dadurch gekennzeichnet, daß auf beide Düsenlippen einwirkende Stellbolzen vorgesehen sind.

8.  Breitschlitzdüse nach Anspruch 1, dadurch gekennzeichnet, daß die Stellbolzen mindestens eine der Düsenlippen auf Zug beanspruchen.

# FIG.1

FIG.2

FIG.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 383 418 (MITSUBISHI JUKOGYO K.K.) <br> * Spalte 8, Zeile 58 - Spalte 9, Zeile 8; Abbildung 1 * <br> --- | 1-8 | B29C47/16 |
| A | US-A-4 281 980 (J.C. HOAGLAND ET AL) <br> * Ansprüche 1,6; Abbildungen * <br> --- | 1 | |
| A | US-A-4 252 519 (P.H. FARMER ET AL) <br> * Ansprüche; Abbildungen * <br> --- | 1 | |
| A | PATENT ABSTRACTS OF JAPAN <br> vol. 12, no. 4 (M-657)(2851) 8. Januar 1988 <br> & JP-A-62 169 615 ( TORAY IND. INC. ) 25. Juli 1987 <br> * Zusammenfassung * <br> --- | 1 | |
| A | EP-A-0 229 680 (CONSTRUCTIEWERKHUIZEN G. VERBRUGGEN) <br> * Spalte 4, Zeile 38 - Zeile 43; Abbildungen * <br> --- | 1 | |
| A | EP-A-0 257 233 (ER-WE-PA) <br> * Abbildung * <br> --- | 1,8 | **RECHERCHIERTE SACHGEBIETE (Int. Cl.5)** |
| A | GB-A-2 162 118 (REIFENHAUSER GMBH & CO MASCHINENFABRIK) <br> * Abbildung * <br><br> ----- | 1,7 | B29C |

Der vorliegende Recherchenbericht wurde für alle Patentansprüche erstellt

| Recherchenort | Abschlußdatum der Recherche | Prüfer |
|---|---|---|
| DEN HAAG | 04 FEBRUAR 1992 | BELIBEL C. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
...........................................................
& : Mitglied der gleichen Patentfamilie, übereinstimmendes Dokument